# DEMANDE DE BREVET EUROPEEN

(11) **EP 2 380 419 A1**
(43) Date de publication de la demande: **26.10.2011**
(21) Numéro de dépôt: 11290190.5
(22) Date de dépôt: 15.04.2011
(51) Int. Cl.: A01B 1/02, A01B 1/16

(54) **Dispositif de désherbage constitué d'un outil solidaire d'un manche, pour arracher les herbes indésirables avec leur système racinaire**

(30) Priorité: 23.04.2010 FR 1001764
(71) Demandeur: Delin, Fabrice, 14140 Pretreville (FR)
(72) Inventeur: Delin, Fabrice, 14140 Pretreville (FR)

(57) **Abrégé**

Dispositif pour retirer du sol les herbes indésirables avec leur système racinaire constitué d'un outil (1) ayant une pluralité de dents (8) pouvant être plates, et présentant un élargissement de chaque côté (9), (10), solidaire d'un manche (2) à son extrémité inférieure caractérisé en ce que le manche (2) est coudé au moins deux fois de manière à présenter au moins un segment intermédiaire (6) oblique par rapport aux segments des extrémités (5), (7) du manche (2).

Particulièrement destiné à améliorer l'efficience de cette activité, le dispositif permet à l'utilisateur de rester debout et de profiter du non alignement des zones de préhensions sur le manche (2) avec la liaison entre l'outil (1) et le manche (2) pour obtenir sans effort l'amplitude de rotation angulaire du manche nécessaire pour créer une bascule importante de l'outil (1) afin de retirer l'herbe et son système racinaire du sol.

## Description

La présente invention se rapporte à un outil pour arracher des herbes indésirables du sol avec leur système racinaire.

Les dispositifs qui existent pour retirer l'herbe indésirable et sa racine nécessitent une action ameublissant le sol, ou bien nécessitent d'exercer une force de traction, ou d'inclinaison sur le manche.

Un dispositif existant publié sous le numéro W02008067548 (A2) constitué d'un manche terminé d'un pieu et d'un fil en tire bouchon, permet de retirer et déchirer la mauvaise herbe lors du retrait du dispositif du sol.

Un autre dispositif publié sous le numéro W02004019672 (A2) comprend une lame fixée à un manche permettant une utilisation en position debout en appliquant une force sur une lame comprenant un point perçant au niveau d'une première extrémité et une partie dentelée définissant une fente au niveau d'une seconde extrémité destinée à saisir une mauvaise herbe.

Un dispositif publié sous le numéro W02006027493 (A1) comprenant un corps allongé vertical muni à sa partie supérieure de deux bras et à sa partie inférieure d'une griffe caractérisé en ce que les extrémités supérieures des deux bras de la zone de préhension comportent deux poignées folles libres en rotation reparties symétriquement par rapport au corps allongé vertical.

Un certain nombre de dispositifs permettent de couper l'herbe à la racine par une lame solidaire d'un manche.

Les dispositifs existant ne permettent pas, de retirer l'herbe du sol avec son système racinaire par une simple bascule d'un coté ou de l'autre de l'outil par rapport au sol provoqué par un déplacement angulaire en rotation du manche, en position debout.

De plus les dispositifs existants n'offrent pas la possibilité de saisir le manche les mains écartées l'une de l'autre selon la largeur des épaules, afin de mobiliser les membres supérieurs dans leurs plans de fonction.

Le dispositif selon l'invention permet de remédier à ces inconvénients.

Le dispositif comprend un outil à type de fourche (1) ayant une pluralité de dents (8) pouvant être plates, et présentant un élargissement de chaque côté (9), (10) pouvant servir de pivot au sol, solidaire d'un manche (2) présentant au moins deux coudes (3), (4) dans des directions opposées de manière à présenter un segment intermédiaire (6) oblique par rapport aux segments des extrémités (5), (7).

Le dispositif selon l'invention apporte à l'utilisateur la possibilité de placer son bassin en regard du segment intermédiaire (6) du manche (2), et de le saisir à deux mains sans que celles ci ne soient dans le plan sagittal, permettant ainsi qu'elles puissent être écartées latéralement l'une de l'autre selon la largeur des épaules.

Le mouvement de bascule latérale de l'outil à type de fourche (1) se trouve facilité par un effet pivot provoqué par l'appui au sol d'un des deux élargissements latéraux (9), (10) de l'outil (1) permettant ainsi de soulever l'herbe prise entre les dents (8) de l'outil (1) afin d'extraire la racine du sol.

L'outil (1) présente à sa partie supérieure un moyen quelconque pour la liaison avec le manche (2), et permettant un changement de configuration droite, configuration gauche.

Particulièrement destiné à retirer les herbes avec leur système racinaire, le dispositif permet à l'utilisateur de rester debout, et de profiter du non alignement des zones de préhensions sur le manche (2) avec la liaison entre l'outil (1) et le manche (2) pour obtenir sans effort l'amplitude de rotation angulaire du manche nécessaire pour créer une bascule importante de l'outil (1), améliorant ainsi l'efficience de cette activité.

Les dessins annexés représentent l'invention :
La figure 1 représente le dispositif sur une vue de face.

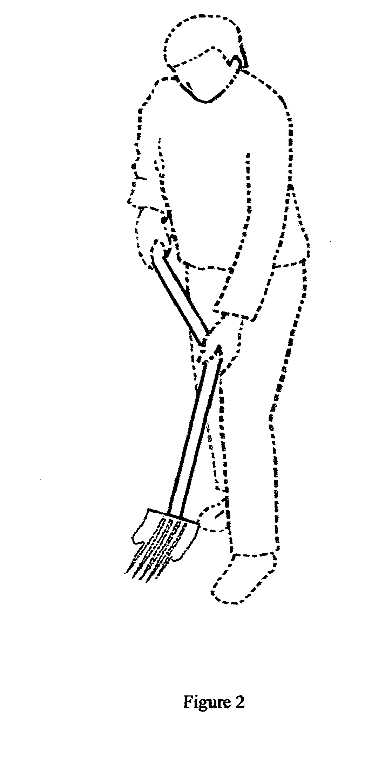

La figure 2 représente un utilisateur manipulant le dispositif pour placer les dents (8) de l'outil (1) à la base de l'herbe.

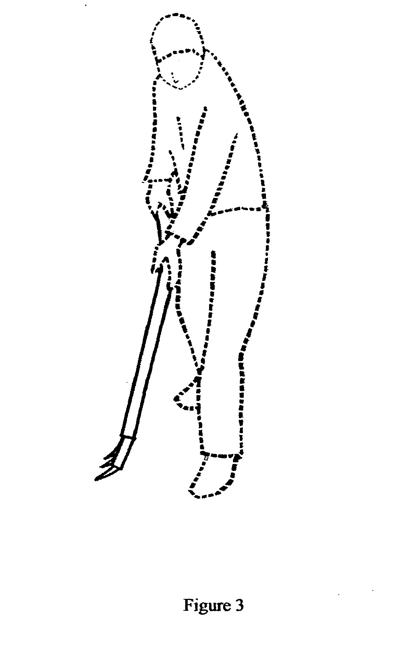

La figure 3 représente un utilisateur manipulant le dispositif pour soulever l'herbe et extraire son système racinaire.

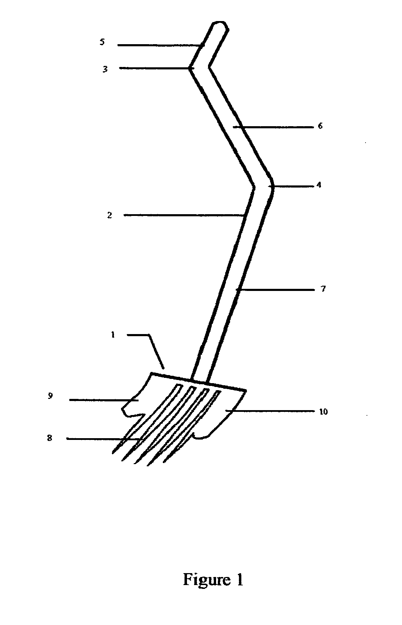

Selon la forme de réalisation de la figure 1, le dispositif présente un manche (2) formant deux coudes (3), (4) constituant des angles obtus entre les segments concernés.

Le manche présente un coude (3) près de son extrémité supérieure, offrant une longueur suffisante au segment supérieur (5) ainsi constitué pour permettre une préhension confortable à ce niveau, et un coude (4) situé proche de son milieu pour offrir une longueur importante entre la zone de préhension la plus basse, et l'extrémité du manche.

L'outil (1) présente des élargissements (9), (10) de chaque coté sensiblement dans le plan des dents (8).

Selon des modes particuliers de réalisations :
- le dispositif est constitué d'un outil (1) en métal, présentant un élargissement de chaque coté (9), (10) du même matériaux, muni d'une douille à sa partie supérieure. Le dit outil est solidaire en recevant dans ladite douille ledit manche en métal cintré à deux niveaux, présentant ainsi un segment supérieur (5) de direction perpendiculaire à la base de l'outil, un segment intermédiaire oblique (6) par rapport au segment supérieur (5), et un segment inférieur (7) oblique par rapport au segment intermédiaire (6) et qui peut avoir une direction parallèle à celle du segment supérieur (5).
- le manche (2) du dispositif peut présenter des coudes (3), (4) formant des angles obtus, qui peuvent être de valeurs équivalentes.
- le manche (2) peut présenter des segments droits (5), (6), (7) et des parties coudées (3), (4) amovibles, qui solidarisées entre elles constituent ledit manche (2).
- les segments (5), (6), (7) et les coudes (3), (4) du manche (2) peuvent être en matériaux différents.
   Selon une variante non illustrée, l'outil (1) peut présenter des dents (8) de longueurs différentes, et des espaces entre les dents de largeurs différentes.

Des éléments dont la forme et la structure facilitent l'effet pivot lors de la prise d'appui au sol peuvent être adjoints aux parties latérales élargies (9), (10) de l'outil (1).

Le manche peut présenter des poignées de préhension recouvrant en partie les segments supérieurs et inférieurs.

L'outil (1) présente des élargissements de chaque coté (9), (10) sur lesquels sont adjoints des éléments annexes dont la forme et la structure peuvent faciliter le pivot souhaité.

La liaison entre l'outil (1) et le manche (2) est une douille percée de part et d'autre symétriquement et traversée par un axe qui peut être retiré aisément.

A titre d'exemple non limitatif, le segment supérieur (5) au dessus du coude supérieur (3) présente une longueur de 15 centimètres, le segment intermédiaire (6) entre les deux coudes (3), (4) présente une longueur de 35 centimètres et le segment inférieur (7) au dessous du coude inférieur (4) présente une longueur de 80 centimètres.

Les coudes (3), (4) entre les segments (5), (6), (7) présentent des angulations de l'ordre de 30°.

## Revendications

1. Dispositif pour retirer du sol les herbes indésirables avec leur système racinaire constitué d'un outil à type de fourche (1) solidaire d'un manche (2) à son extrémité inférieure présentant au moins deux coudes (3), (4) dans des directions opposées de manière à présenter un segment intermédiaire (6) oblique par rapport aux segments des extrémités (5), (7), **caractérisé en ce que** l'outil à type de fourche (1) présente une pluralité de dents (8), et présente un élargissement de chaque côté (9), (10) pouvant servir de pivot au sol.

2. Dispositif selon la revendication 1 **caractérisé en ce que** le manche (2) peut présenter des segments (5), (6), (7) et des coudes (3), (4) amovibles.

3. Dispositif selon la revendication 1 **caractérisé en ce que** le manche (2) peut être muni de poignées de préhension.

4. Dispositif selon la revendication 1 **caractérisé en ce que** les segments (5), (6), (7) et les coudes (3), (4) du manche (2) peuvent être en matériaux différents.

5. Dispositif selon la revendication 1 **caractérisé en ce que** l'outil à type de fourche (1) peut présenter des espaces de largeurs différentes entre les dents (8).

6. Dispositif selon la revendication 1 **caractérisé en ce que** des éléments dont la forme et la structure facilitent l'effet pivot lors de la prise d'appui au sol peuvent être adjoints aux parties latérales élargies (9), (10) de l'outil (1).
